# Europäisches Patentamt

# European Patent Office

# Office européen des brevets

(19)

(11) Veröffentlichungsnummer: **0 111 801**
**B1**

(12) **EUROPÄISCHE PATENTSCHRIFT**

(45) Veröffentlichungstag der Patentschrift:
**16.03.88**

(51) Int. Cl.⁴: **C 01 B 25/234,** C 01 B 25/46

(21) Anmeldenummer: **83112176.9**

(22) Anmeldetag: **03.12.83**

(54) **Verfahren zur Reinigung von Nassverfahrensphosphorsäure.**

(30) Priorität: **15.12.82 DE 3246415**

(43) Veröffentlichungstag der Anmeldung:
**27.06.84 Patentblatt 84/26**

(45) Bekanntmachung des Hinweises auf die Patenterteilung:
**16.03.88 Patentblatt 88/11**

(84) Benannte Vertragsstaaten:
**AT BE CH DE FR GB IT LI NL SE**

(56) Entgegenhaltungen:
**DE-A-2 926 943**
**DE-C-2 334 019**
**US-A-3 318 661**
**US-A-4 271 128**

(73) Patentinhaber: **HOECHST AKTIENGESELLSCHAFT,**
**Postfach 80 03 20, D-6230 Frankfurt am Main 80**
**(DE)**

(72) Erfinder: **Gradl, Reinhard, Dr., Am grünen Weg 6,**
**D-5030 Hürth (DE)**
Erfinder: **Heymer, Gero, Dr., Fasanenaue 12, D-5042**
**Erftstadt (DE)**
Erfinder: **Schimmel, Günther, Dr., Ehrenstrasse 16,**
**D-5042 Erftstadt (DE)**

LIBER, STOCKHOLM 1988

EP 0 111 801 B1

**Beschreibung**

Die vorliegende Erfindung betrifft ein Verfahren zur Reinigung von Naßverfahrensphosphorsäure mit Hilfe eines organischen Lösungsmittels das mit Wasser nicht oder nur begrenzt mischbar ist.

Für die extraktive Reinigung von Naßverfahrensphosphorsäure kennt man seit langem zwei Arten von Verfahren. In den meisten Fällen wird versucht, mit Hilfe organischer Lösungsmittel, die nicht oder teilweise mit Wasser mischbar sind, die Phosphorsäure möglichst vollständig aus der rohen Naßverfahrensphosphorsäure zu extrahieren. So ist z. B. den Verfahren nach DE-B 21 27 147 und DE-A 26 57 189 sowie DE-A 29 26 943 der Nachteil gemeinsam, daß sie im Extraktionsschritt mehrere Stufen und/oder hohe Lösungsmittel-Säure-Verhältnisse sowie Schwefelsäure als Extraktionshilfsmittel anwenden.

Dabei kommt es jedoch häufig in der betrieblichen Praxis zu mehr oder weniger starken Ausscheidungen von Feststoffen, die zu Verkrustungen und Verstopfungen führen.

Außerdem sinkt, wenn hohe $P_2O_5$-Ausbeuten erzielt werden wollen, die Selektivität des Lösungsmittels stark ab, so daß der organische Extrakt ein hohes Maß an Verunreinigungen aufweist, was wiederum aufwendige Waschoperationen (hohe Stufenzahl, große Waschwassermengen) erforderlich macht.

Bei der anderen Gruppe der oben genannten Verfahren handelt es sich um die sogenannten "Splittingverfahren", die darauf beruhen, daß aus der zur Reinigung eingesetzten Naßverfahrensphosphorsäure lediglich ein gewisser Teil des $P_2O_5$ extrahiert und die zurückbleibende Raffinatsäure, mit einem entsprechend höheren Grad an Verunreinigungen einer anderweitigen Verwendung zugeführt wird.

Eine für ein solches Splittingverfahren typische Arbeitsweise ist z. B. in der US-A 3 318 661 beschrieben. Danach wird ein Gewichtsteil rohe Phosphorsäure mit einem $P_2O_5$-Gehalt von 48 bis 62 Gew.-% $P_2O_5$ mit 0,5 bis 1,5 Gewichtsteilen Isopropylether (IPE) extrahiert, wobei etwa 40 % des $P_2O_5$ in- das organische Lösungsmittel übergehen. Die restlichen 60 % des ursprünglich eingesetzten $P_2O_5$ bilden, zusammen mit der Hauptmenge der Verunreinigungen, die wäßrige Raffinatsäure, welche eine $P_2O_5$ Konzentration von etwa 47 - 48 % aufweist und zur Herstellung von Düngemitteln verwendet werden kann. Aus dem abgetrennten Isopropylether-Extrakt wird die gereinigte Phosphorsäure entweder dadurch gewonnen, daß man das organische Lösungsmittel destillativ entfernt, wobei eine etwa 85 %-ige Phosphorsäure erhalten wird, oder dadurch, daß man dem Extrakt soviel Wasser zusetzt, daß aus der organischen Phase eine wäßrige Phosphorsäurelösung mit einem $P_2O_5$-Gehalt von etwa 48 Gew.-% abgeschieden wird.

Von Nachteil an dieser Arbeitsweise ist, daß es sich dabei nicht um eine Extraktion im engeren Sinn handelt, sondern um eine Reaktion zwischen IPE und $H_3PO_4$ zu einem Komplex, der in der Rohsäure unlöslich ist. Ein größeres Lösungsmittel-Säure-Verhältnis, z. B. zur Verbesserung der Selektivität, ist nicht anwendbar, da sich dabei eine dritte Phase bildet.

Der wiederum brachte erhebliche Probleme beim Betrieb in technischen Anlagen mit sich. Außerdem kann die aus dem Komplex zwischen IPE und $H_3PO_4$ bestehende organische Phase nicht gewaschen werden, so daß die gereinigte Säure nur begrenzt anwendungsfähig ist. Nachteilig ist ferner, daß die Rohsäure-Konzentration mindestens 54 % $P_2O_5$ betragen muß, um wenigstens eine Ausbeute von 40 % zu erzielen, während handelsübliche Rohsäuren $P_2O_5$-Gehalte von nur etwa 50 bis höchstens 52 % haben. Höhere Ausbeuten von beispielsweise 60 % erfordern schon den Einsatz von etwa 57 %-iger Säure, so daß vor der Extraktion zunächst eine Konzentrierung der Rohsäure erfolgen müßte.

Nach einem anderen Splittingverfahren, welches Gegenstand der DE-B-23 20 877 ist, wurde bereits versucht, Phosphorsäure mit Dialkylketonen zu extrahieren.

Nach dieser bekannten Arbeitsweise werden zwischen 50 und 70 % des durch die Phosphorsäure eingesetzten $P_2O_5$ extrahiert, wobei empfohlen wird, mehr als 1 Extraktionsstufe zu verwenden, um bei niedriger Stufenzahl hohe $P_2O_5$-Konzentrationen im Extrakt zu erzielen. Deshalb wird dabei auch bewußt das Lösungsmittel-Säure-Verhältnis mit 0,5 - 2 : 1, insbesondere 1,2 - 1,4 : 1 sehr klein gewählt. Höhere Verhältnisse werden als nachteilig bezeichnet, da damit ein Bedarf an größeren Reaktionsgefäßen verbunden sei.

Von erheblichem Nachteil bei diesem Verfahren aber ist, daß durch das niedrige Lösungsmittel-Säure-Verhältnis die Selektivität des Lösungsmittels sehr gering ist. Deshalb entsteht bei der Extraktion ein stark verunreinigter Extrakt. Der Abreicherungsgrad für Eisen bezogen auf $P_2O_5$ liegt bei nur ca. 63 Gew.-% von der Rohsäure zum organischen Extrakt. Es ist deshalb erfoderlich, diesen Extrakt in mehreren Stufen mit einer großen Menge bereits gereinigter Phosphorsäure zu waschen. Das Verhältnis Extrakt zu Waschsäure liegt dabei zwischen 2 und 4 : 1. Bei Verwendung der aus der Rückextraktion abfließenden Reinsäure als Waschflüssigkeit bedeutet dies, daß 25 bis 46 Gew.-% der anfallenden Säure wieder zurückgeführt werden müssen, so daß die schon gereinigte Phosphorsäure zum großen Teil wieder abgewertet wird.

Aber selbst durch diesen großen Aufwand wird nur ein mäßiger Reinheitsgrad der Säure erzielt.

Außerdem entsteht bei der Extraktion eine wäßrige Phase, die einen Gehalt von 40 bis 47 Gew.-% $P_2O_5$ aufweist. Normalerweise aber beträgt der $P_2O_5$-Gehalt von konzentrierten Rohphosphorsäuren mindestens 50 Gew.-% $P_2O_5$ und von Rohphosphorsäuren nach dem Dihydratprozeß ca. 30 Gew.-% $P_2O_5$, so daß diese wäßrigen Rückstände für eine Weiterverarbeitung entsprechend verdünnt oder konzentriert werden müssen.

Aufgabe der vorliegenden Erfindung ist es Verfahren zur Reinigung von Phosphorsäure nach diesem sogenannten Splittingprinzip zu verbessern, das darauf beruht, rohe Naßverfahrensphosphorsäure, die einen Gehalt von mehr als 45 Gew.-% $P_2O_5$ aufweist zu reinigen, indem man das Ausgangsprodukt mit einem organischen Lösungsmittel, das mit Wasser nicht oder nur begrenzt mischbar und Phosphorsäure zu lösen imstande ist, so in Kontakt bringt, daß unter Bildung eines wäßrigen Phosphorsäureraffinates, welches einen geringeren $P_2O_5$-Gehalt als das Ausgangsprodukt besitzt, lediglich ein Teil des im Ausgangsprodukt enthaltenen $P_2O_5$ von dem Lösungsmittel aufgenommen wird. Anschließend trennt man die dadurch entstandene organische Phosphorsäurelösung von dem Phosphorsäureraffinat, wäscht sie aus und führt die erhaltene Waschlösung in den Prozeß zurück. Aus der gewaschenen organischen Phosphorsäurelösung gewinnt man dann in bekannter Weise die gereinigte Phosphorsäure bzw. Phosphatsalzlösung (Alkali- oder Ammoniumphosphat), während man das verbliebene Phosphorsäureraffinat einer anderweitigen Verwendung zuführt.

Überraschenderweise läßt sich sich eine entscheidende Verbesserung dieser Verfahren in technischer und wirtschaftlicher Hinsicht erzielen, wenn man

a) durch Vermischen des Ausgangsproduktes mit dem organischen Lösungsmittel in einer einzigen Verfahrensstufe so viel Phosphorsäure aus der rohen Naßverfahrensphosphorsäure extrahiert, daß zwischen 40 und 70 Gew.-%, vorzugsweise 50 bis 55 Gew.-% des eingesetzten $P_2O_5$ in die organische Phase überführt werden und das entstehende wäßrige Phosphorsäureraffinat nur noch einen $P_2O_5$-Gehalt von 28 bis 32 Gew.-%, vorzugsweise von 30 bis 32 Gew.-%, aufweist, indem man das Lösungsmittel mit dem Ausgangsprodukt in einem Volumenverhältnis von mehr als 4 : 1, vorzugsweise von 6 : 1-10 : 1, vermischt und die entstandene organische Phosphorsäurelösung von dem Phosphorsäureraffinat abtrennt,

b) dann die abgetrennte organische Phosphorsäurelösung mit einer Waschlösung auswäscht, deren Menge höchstens 5 %, vorzugsweise 3,3 bis 2 %, des Volumens der Phosphorsäurelösung beträgt, darauf die Waschlösung in die Stufe a zurückführt, dann aus der gewaschenen Phosphorsäurelösung in bekannter Weise die gereinigte Phosphorsäure bzw. Phosphatsalzlösung gewinnt und

c) das in Stufe a entstandene wäßrige Phosphorsäureraffinat - gegebenenfalls nach vorheriger Entfernung von Lösungsmittelresten - direkt weiterverwendet oder einer bekannten Reinigungsoperation unterwirft.

Ausgangsprodukt des erfindungsgemäßen Verfahrens ist, wie bereits erwähnt, eine handelsübliche Rohphosphorsäure mit einem $P_2O_5$-Gehalt von mehr als 45 Gew.-%. Wenn ein hoher Reinigungsgrad angestrebt wird, ist eine Vorreinigung dieser Säure vor allem von der als Hauptverunreinigung enthaltenen Schwefelsäure und den organischen Verunreinigungen empfehlenswert.

Dazu wird die Säure in an sich bekannter Weise mit Calciumionen in Gegenwart von Aktivkohle bei etwa 80°C behandelt, wobei über zwischenzeitlich gebildetes Calciumsulfathalbhydrat eine vorgereinigte (meist grün gefärbte) Säure entsteht sowie ein im wesentlichen aus Gips bestehender Filterkuchen, dessen Menge etwa 5-6 Gew.-% der eingesetzten Rohsäure ausmacht und der problemlos deponiert werden kann.

Die meisten Rohsäuren enthalten in der Regel außerdem als Verunreinigungen neben Ionen von Schwermetallen wie Cadmium, Kupfer, Blei und Quecksilber, auch Ionen des Arsens. Falls die Verwendung der Verfahrensprodukte oder die Umwelt- bzw. Deponieprobleme es erfordern, daß diese Verunreinigungen entfernt bzw. in konzentrierter Form einer Spezialdeponie zugeführt werden müssen, können diese Ionen vor der Extraktion in einem einfachen Verfahrensschritt aus der gegebenenfalls vorgereinigten Rohsäure durch deren Behandlung mit Diorganyldithiophosphorsäureestern und einem Adsorptionsmittel entfernt werden. Alternativ ist es möglich, diese Maßnahme auch nach der Extraktionsstufe mit dem erhaltenen Phosphorsäureraffinat durchzuführen.

Eine weitere Möglichkeit zur Erzielung einer reinen, insbesondere $SO_4$-Ionen armen Phosphorsäure ist beispielsweise in der europäischen Patentanmeldung EP-A-0 029 132 beschrieben, wonach in einer mehrstufigen Gegenstromextraktion in Gegenwart von Schwefelsäure mit Hilfe organischer Lösungsmittel, die mit Wasser nicht oder nur begrenzt mischbar sind, die Sulfationen durch Zugabe von Bariumverbindungen entfernt werden und die Phosphorsäure aus dem abgetrennten organischen Extrakt rückgewonnen wird. Hierbei nimmt man die Reinigung in einer n-stufigen Extraktionsanlage vor, in der n gleich oder größer 5 ist; setzt die Bariumverbindung der zu reinigenden Phosphorsäure zu und führt die erhaltene Mischung am Kopf der Extraktionsanlage zu. Außerdem dispergiert man die organische Lösungsmittelphase in der wäßrigen Phase und führt die Schwefelsäure im Gegenstrom zur Phosphorsäure, indem sie in einer der Stufen von Stufe 4 bis Stufe n-1 zugegeben wird.

Vorzugsweise wird bei dem erfindungsgemäßen Verfahren das organische Lösungsmittel im Kreislauf geführt und mit dem Wassergehalt eingesetzt, mit dem es nach Gewinnung der gereinigten Phosphorsäure bzw. Phosphorsalzlösung aus der organischen Phosphorsäurelösung anfällt. Als organisches Lösungsmittel eignet sich hierzu Amylalkohol, insbesondere solcher, der aus der Oxosynthese stammt.

Die Extraktionsausbeute (bzw. das Splittingsverhältnis) hängt ab von der $P_2O_5$-Konzentration der Rohsäure, von der Stufenzahl, vom Lösungsmittel : Säure-Verhältnis und von der zurückgeführten Waschwassermenge. Erfindungsgemäß beträgt die Säurekonzentration mindestens 45 Gew.-% $P_2O_5$ und die Extraktion erfolgt in einer Stufe. Durch das Lösungsmittel-Säure-Verhältnis wird aber nicht nur die Extraktionsausbeute, sondern auch die $P_2O_5$-Konzentration in der organischen und in der wäßrigen Phase bestimmt. Für manche Fälle mag es notwenig sein, die $P_2O_5$-Konzentration im Extrakt und in der wäßrigen Phase groß zu wählen, also mit kleinem Lösungsmittel-Säure-Verhältnis zu extrahieren, wie diese auch in der bereits erwähnten DE-A 23 20 877 beschrieben sind.

Erfindungsgemäß ist es aber von Vorteil, mit einem hohen Lösungsmittel-Säure-Verhältnis zu extrahieren und niedrige $P_2O_5$-Konzentrationen in der organischen Phase in Kauf zu nehmen, da dadurch, wie überraschend gefunden wurde, die Selektivität des Lösungsmittels verbessert wird und dadurch die organische Extraktphase weniger stark mit Kationen verunreinigt ist. Auf diese Weise werden die kationischen

3

Verunreinigungen (z. B. gemessen am Eisen-Gehalt) von der Rohsäure zum organischen Extrakt um über 90 % abgereichert. Für bestimmte Anwendungsgebiete genügt die Reinheit einer aus einem solchen Extrakt gewinnbaren Reinsäure. Für höhere Reinheitsansprüche kann dieser Extrakt in 1 bis 3 Waschstufen gereinigt werden. Dazu genügt dann jedoch eine sehr kleine Wassermenge von ca. 1/30 des Rohextraktvolumens, so daß das entstehende Waschraffinat, das in die Extraktionsstufe zurückgeführt werden kann, praktisch die gleiche Konzentration an $P_2O_5$ aufweist, wie die bei der Extraktion entstehende wäßrige Phase. Die Rückextraktion der Phosphorsäure aus der organischen Phase kann in bekannter Weise mit Wasser oder einer wäßrigen Alkalilösung erfolgen, wobei im ersten Fall eine gereinigte Säure und im zweiten Fall eine Alkaliphosphatlösung entsteht. Die Mengenverhältnisse Wasser bzw. Alkalilösung zu Extraktphase sollen so groß sein, daß die gesamte Phosphorsäure aus der organischen in die wäßrige Phase übergeführt wird. Für die weitere Verwendung der entstehenden gereinigten Säure bzw. Alkaliphosphatlösung ist es zweckmäßig, das darin gelöste Lösungsmittel z. B. durch eine Strippung mit Dampf zu entfernen bzw. zurückzugewinnen.

Die erfindungsgemäß aus der Extraktionsstufe erhaltene Raffinatsäure enthält zwischen 30 und 60, vorzugsweise zwischen 45 und 50 % des eingesetzten Roh-$P_2O_5$ in einer Konzentration von mindestens 28 vorzugsweise zwischen 30 und 32 % $P_2O_5$. Dies ist nämlich gerade die Konzentration an $P_2O_5$, wie sie auch beim Aufschluß von Phosphaterz mit Schwefelsäure nach dem Dihydratverfahren in der Rohsäure vorliegt und die als Ausgangsprodukt für die bekannten Fällungsreinigungs-Verfahren dient.

Im folgenden soll das erfindungsgemäße Verfahren an einem Beispiel erläutert werden.

Für die nachfolgenden Versuche wurde eine handelsübliche Rohsäure auf Basis nordafrikanischen Phosphats mit folgender Zusammensetzung verwendet (alle Angaben in Gew.-%).

| $P_2O_5$: | 50,3 | Fe: | 0,27 | Cr: | 0,011 |
|---|---|---|---|---|---|
| $SO_4$: | 2,6 | Al: | 0,12 | As: | 0,0008 |
| $C_{org}$: | 0,048 | Mg: | 0,71 | V: | 0,015 |
| F: | 0,32 | Zn: | 0,025 | Cd: | 0,0011 |

100 kg dieser Säure wurden zunächst auf ca. 80°C erwärmt und nacheinander mit 0,3 kg Aktivkohle und 2,14 kg Calciumhydroxid versetzt. Die Mischung wurde ca. 50 Minuten gerührt und schließlich auf einem Druckfilter abfiltriert. Der Filterkuchen wurde mit 10 l heißem Wasser gewaschen und das Waschfiltrat mit dem Primärfiltrat vereinigt.

Die entstehende vorgereinigte Säure hatte folgende Zusammensetzung (Gewichts%):.

| $P_2O_5$: | 47,6 | Fe: | 0,26 | Cr: | 0,010 |
|---|---|---|---|---|---|
| $SO_4$: | 0,43 | Al: | 0,11 | As: | 0,0007 |
| $C_{org}$: | 0,009 | Mg: | 0,67 | V: | 0,014 |
| F: | 0,3 | Zn: | 0,024 | Cd: | 0,0010 |

1000 g dieser vorgereinigten Säure wurden auf eine Temperatur von 70°C gebracht und mit 1,5 g Bis(2-ethylhexyl)dithiophosphorsäureester versetzt und ca. 30 min gerührt. Danach wird die Mischung auf 35°C abgekühlt und 10 g Perlit zugegeben. Nach weiteren 30 min Rührzeit wird die Mischung abfiltriert. Die Phosphorsäure enthält keinen Thioester. Die Gehalte an Cd und As liegen jeweils unter 0,0001 %.

Für die weiteren Versuche wurde jedoch die vorgereinigte, Cadmium und Arsen enthaltene Säure (Analyse S. 9 unten) verwendet.

In einer Mixer-Settler-Einheit wurden gleichzeitig 1666,3 g/h dieser Säure und 256,2 g/h rezirkulierten Waschraffinats dem zuvor 10 g Bariumkarbonat zugesetzt wurde, und die in die Säureleitung einmündeten, mit 5826,1 g/h wassergesättigtem Amylalkohol extrahiert, wobei die wäßrige Phase kontinuierlich geführt und die organische Phase darin dispergiert wurde. Es entstanden 6530,6 g/h organischer Extrakt, der 7,34 % $P_2O_5$ und 0,0033 % Eisen enthielt, sowie 1218 g/h wäßriger Rückstand mit untenstehender Zusammensetzung. Der org. Extrakt wurde mit Wasser im Volumenverhältnis 30 : 1 (org.: wäßrig) in einer dreistufigen Mixer-Settler-Anordnung im Gegenstrom gewaschen und schließlich in einer Extraktionskolonne mit rotierenden Einbauten mit Wasser im Volumenverhältnis 6 : 1 (org.: wäßrig) reextrahiert. Die dabei entstehende Reinsäure wurde bis zu einem $P_2O_5$-Gehalt von ca. 60 % konzentriert.

Zusammensetzung der Reinsäure

| $P_2O_5$: | 59,7 | Fe: | 0,0001 | Cr: | < 0,0001 |
|---|---|---|---|---|---|
| $SO_4$: | 0,04 | Al: | < 0,0001 | As: | 0,0004 |
| $C_{org}$: | 0,05 | Mg: | < 0,0001 | V: | 0,0001 |
| F: | 0,01 | Zn: | < 0,0001 | Cd: | < 0,0001 |

In der bei der Extraktion anfallenden wäßrigen Phase (1218 g/h) waren 393,4 g/h $P_2O_5$ enthalten. Dies entspricht einem Anteil von 48,5 % des Roh-$P_2O_5$ oder anders ausgedrückt: Die Ausbeute betrug also 51,5 %. Die Raffinatsäure hatte folgende Zusammensetzung (Gewichts%):

| P$_2$O$_5$: | 32,3 | Fe: | 0,36 | Cr: | 0,016 |
| SO$_4$: | 0,17 | Al: | 0,15 | As: | 0,0002 |
| F: | 0,3 | Mg: | 0,92 | V: | n. best. |
| Amylalk. | 0,3 | Zn: | 0,033 | Cd: | 0,0018 |

Diese Säure wurde am Kopf einer Füllkörperkolonne aufgegeben und durch Einblasen von Dampf am unteren Kolonnenende von gelöstem und suspendiertem Alkohol befreit, wobei die Zusammensetzung der Säure und insbesondere der P$_2$O$_5$-Gehalt praktisch erhalten blieb.

**Patentansprüche**

1. Verfahren zur Reinigung von roher Naßverfahrensphosphorsäure, die einen Gehalt an P$_2$O$_5$ von 45 - 54 Gew.-% aufweist, indem man das Ausgangsprodukt mit einem organischen Lösungsmittel, das mit Wasser nicht oder nur begrenzt mischbar und Phosphorsäure zu lösen imstande ist, so in Kontakt bringt, daß unter Bildung eines wäßrigen Phosphorsäureraffinates, welches einen geringeren P$_2$O$_5$-Gehalt als das Ausgangsprodukt besitzt, lediglich ein Teil des im Ausgangsprodukt enthaltenen P$_2$O$_5$ von dem Lösungsmittel aufgenommen wird, anschließend die dadurch entstandene organische Phosphorsäurelösung von dem Phosphorsäureraffinat trennt und auswäscht, die erhaltene Waschlösung in den Prozeß zurückführt und aus der gewaschenen organischen Phosphorsäurelösung gereinigte Phosphorsäure oder Phosphatsalzlösungen gewinnt, während man das verbliebene Phosphorsäureraffinat einer anderweitigen Verwendung zuführt, dadurch gekennzeichnet, daß man

a) durch Vermischen des Ausgangsproduktes mit dem organischen Lösungsmittel in einer einzigen Verfahrensstufe so viel Phosphorsäure aus der rohen Naßverfahrensphosphorsäure extrahiert, daß zwischen 40 und 70 Gew.-% des eingesetzten P$_2$O$_5$ in die organische Phase überführt werden und das entstehende wäßrige Phosphorsäureraffinat nur noch einen P$_2$O$_5$-Gehalt von 28 bis 32 Gew.-% aufweist, indem man das Lösungsmittel mit dem Ausgangsprodukt in einem Volumenverhältnis von mehr als 4 : 1 vermischt und die entstandene organische Phosphorsäurelösung von dem Phosphorsäureraffinat abtrennt,

b) dann die abgetrennte organische Phosphorsäurelösung mit einer Waschlösung auswäscht, deren Menge höchstens 5 % des Volumens der Phosphorsäurelösung beträgt, danach die Waschlösung in die Stufe a) zurückführt, dann aus der gewaschenen Phosphorsäurelösung in bekannter Weise die gereinigte Phosphorsäure bzw. Phosphatsalzlösung gewinnt und

c) das in Stufe a) entstandene wäßrige Phosphorsäureraffinat - gegebenenfalls nach vorheriger Entfernung von Lösungsmittelresten - direkt weiterverwendet oder einer bekannten Reinigungsoperation unterwirft.

2. Verfahren nach Anspruch 1, dadurch gekennzeichnet, daß man aus dem Ausgangsprodukt so viel Phosphorsäure extrahiert, daß ein wäßriges Phsophorsäureraffinat mit einem P$_2$O$_5$-Gehalt von 30 bis 32 Gew.-% zurückbleibt.

3. Verfahren nach Anspruch 1 oder 2, dadurch gekennzeichnet, daß man das organische Lösungsmittel mit dem Ausgangsprodukt in einem Volumenverhältnis von 6 : 1 bis 10 : 1 vermischt.

4. Verfahren nach einem der Ansprüche 1 bis 3, dadurch kennzeichnet, daß man die abgetrennte organische Phosphorsäurelösung mit einer Menge an Waschlösung auswäscht, die 3,3 bis 2 % des Volumens der Phosphorsäurelösung beträgt.

5. Verfahren nach einem der Ansprüche 1 bis 4, dadurch gekennzeichnet, daß man das Ausgangsprodukt, bevor es mit dem organischen Lösungsmittel vermischt wird, zur Entfernung von überschüssigem Sulfat und organischen Verbindungen, in an sich bekannter Weise mit Calciumverbindungen und Aktivkohle behandelt.

6. Verfahren nach einem der Ansprüche 1 bis 5, dadurch gekennzeichnet, daß man das Ausgangsprodukt vor der Extraktion oder das erhaltene wäßrige Phosphorsäureraffinat zur Entfernung von Schwermetallionen und Arsen mit Diorganyldithiophosphorsäureestern und einem Adsorptionsmittel behandelt.

7. Verfahren nach einem der Ansprüche 1 bis 6, dadurch gekennzeichnet, daß man als organisches Lösungsmittel Amylalkohol einsetzt.

8. Verfahren nach Anspruch 7, dadurch gekennzeichnet, daß man Amylalkohol einsetzt, der aus der Oxosynthese stammt.

9. Verfahren nach einem der Ansprüche 1 bis 8, dadurch gekennzeichnet, daß man das organische Lösungsmittel im Kreislauf führt und mit dem Wassergehalt einsetzt, mit dem es nach Gewinnung der gereinigten Phosphorsäure bzw. Phosphatsalzlösung aus der organischen Phosphorsäurelösung anfällt.

10. Verfahren nach einem der Ansprüche 1 bis 9, dadurch gekennzeichnet, daß man durch Vermischen des Ausgangsproduktes mit dem organischen Lösungsmittel 50 bis 55 Gew.-% des eingesetzten P$_2$O$_5$ in die organische Phase überführt.

**Claims**

1. Process for purifying crude wet-process phosphoric acid containing 45-54 weight % P$_2$O$_5$ by contacting the feed product with an organic solvent being immiscible or only partially miscible with water and capable of dissolving phosphoric acid so that merely a portion of the P$_2$O$_5$ contained in the feed product is absorbed by the solvent and an aqueous phosphoric acid raffinate containing less P$_2$O$_5$ than the feed product is formed; subsequently separating the organic phosphoric acid solution formed from the phosphoric acid raffinate and scrubbing the said solution; recycling the scrubbing solution into the process; recovering purified phosphoric acid or phosphate salt solution from the scrubbed organic phosphoric acid solution, and utilizing the remaining phosphoric acid raffinate for other purposes, which comprises:

a) extracting in a single process step from the crude wet-process phosphoric acid a quantity of phosphoric acid sufficient for 40 to 70 weight % of the P$_2$O$_5$ used to become extracted into the organic phase, and for the resulting aqueous phosphoric acid raffinate to contain at most 28-32 weight %, P$_2$O$_5$, by mixing the organic solvent with the feed product in a ratio by volume of more than 4 : 1. and separating the organic phosphoric acid solution from the phosphoric acid raffinate;

b) scrubbing the separated organic phosphoric acid solution with a quantity of scrubbing solution corresponding to at most 5 % of the volume of the phosphoric acid solution; recycling the scrubbing solution into stage a), and recovering in known manner the purified phosphoric acid or phosphate salt solution from the scrubbed phosphoric acid solution; and

c) directly utilizing or subjecting to a standard purifying treatment the aqueous phosphoric acid raffinate obtained in stage a), if desired after prior removal of residual solvent.

2. Process as claimed in claim 1, wherein phosphoric acid is extracted from the feed product to such an extent that the aqueous phosphoric acid raffinate contains 30-32 weight % P$_2$O$_5$.

3. Process as claimed in claim 1 or 2, wherein the organic solvent is mixed with the feed product in a ratio by volume of 6 : 1 to 10 : 1.

4. Process as claimed in any of claims 1 to 3, wherein the separated organic phosphoric acid solution is scrubbed with a quantity of scrubbing solution corresponding to 3.3 -2 % of the volume of the phosphoric acid solution.

5. Process as claimed in any of claims 1 to 4, wherein the feed product is initially treated in known fashion with a calcium compound and active carbon and thereby freed from sulfate in excess and organic compounds, and then mixed with the organic solvent.

6. Process as claimed in any of claims 1 to 5, wherein prior to extraction the feed product or aqueous phosphoric acid raffinate is treated with a diorganyldithiophosphoric acid ester and an adsorbent so as to be freed from heavy metal ions and arsenic.

7. Process as claimed in any of claims 1 to 6, wherein amyl alcohol is used as the organic solvent.

8. Process as claimed in claim 7, wherein the amyl alcohol used originates from an oxo-synthesis.

9. Process as claimed in any of claims 1 to 8, wherein the organic solvent is cycled and used with that content of water which it has after recovery of the purified phosphoric acid or phosphate salt solution from the organic phosphoric acid solution.

10. Process as claimed in any of claims 1 to 9, wherein the feed product is mixed with the organic solvent so that 50-55 weight % of the P$_2$O$_5$ is extracted into the organic phase.

**Revendications**

1. Procédé de purification d'acide phosphorique brut préparé par voie humide présentant une teneur en P$_2$O$_5$ de 45-54 % en poids en mettant le produit de départ en contact avec un solvant organinque immiscible ou spulement partiellement miscible avec l'eau et capable de dissoudre l'acide phosphorique de manière que justement une partie du P$_2$O$_5$ contenu dans le produit de départ est absorbée par le solvant avec formation d'un raffinat d'acide phosphorique aqueux présentant une teneur en P$_2$O$_5$ plus faible que le produit de départ, en séparant la solution organique d'acide phosphorique formée du raffinat d'acide phosphorique et la lavant, en recyclant la solution de lavage dans le procédé et en récupérant l'acide phosphorique purifié ou des solutions de sels phosphates à partir de la solution organique lavée d'acide phosphorique et en utilisant le raffinat d'acide phosphorique retenu pour d'autres applications, caractérisé en ce que :

a) on extrait en un seul stade opératoire à partir de l'acide phosphorique brut humide assez d'acide phosphorique pour que 40-70 % en poids du P$_2$O$_5$ utilisé passent dans la phase organique et que le raffinat d'acide phosphorique aqueux formé n'ait plus encore qu'une teneur en P$_2$O$_5$ de 28-32 % en poids, en mélangeant le solvant organique avec le produit de départ dans un rapport en volume de plus de 4 : 1, et on sépare la solution organique d'acide phosphorique formée du raffinat d'acide phosphorique.

b) on lave ensuite la solution organique d'acide phosphorique séparée avec une quantité d'une solution de lavage correspondant au plus à 5 % du volume de la solution d'acide phosphorique, on renvoie ensuite la solution de lavage dans le stade a) et on récupère de manière connue à partir de la solution d'acide phosphorique lavée l'acide phosphorique purifié ou la solution de phosphate, et

c) on utilise directement le raffinat aqueux d'acide phosphorique obtenu en stade b), éventuellement après élimination au préalable de solvant résiduaire ou on le soumet à une opération de purification connue.

2. Procédé selon la revendication 1, caractérisé en ce que l'on extrait du produit de départ la quantité d'acide phosphorique nécessaire pour qu'il reste un raffinat aqueux d'acide phosphorique d'une teneur en $P_2O_5$ de 30-32 % en poids.

3. Procédé selon la revendication 1 ou 2, caractérisé en ce que l'on mélange le solvant organique avec le produit de départ dans un rapport en volume de 6 : 1 à 10 : 1.

4. Procédé selon l'une des revendications 1 à 3, caractérisé en ce que la solution organique d'acide phosphorique séparée est lavée avec une quantité de solution de lavage égale à 3,3-2 % du volume de la solution d'acide phosphorique.

5. Procédé selon l'une des revendications 1 à 4, caractérisé en ce que le produit de départ est d'abord traité de manière connue avec des composés de calcium et du charbon actif pour en éliminer le sulfate en excès et des composés organiques, et ensuite mélange avec le solvant organique.

6. Procédé selon l'une des revendications 1 à 5, caractérisé en ce qu'avant extraction on traite le produit de départ ou le raffinat aqueux d'acide phosphorique obtenu par des esters d'acide diorganyldithiophosphorique et par un adsorbant pour en éliminer les ions de métaux lourds et l'arsenic.

7. Procédé selon l'une des revendications 1 à 6, caractérisé en ce que l'on utilise comme solvant organique l'alcool amylique.

8. Procédé selon la revendication 7, caractérisé en ce que l'on utilise un alcool amylique provenant d'une oxo-synthèse.

9. Procédé selon l'une des revendications 1 à 8, caractérisé en ce que l'on met le solvant organique en circulation et on l'utilise avec cette teneur en eau qu'il présente après récupération de l'acide phosphorique purifié ou de la solution du sel phosphate à partir de la solution organique d'acide phosphorique.

10. Procédé selon l'une des revendications 1 à 9, caractérisé en ce qu'on fait passer 50-55 % en poids du $P_2O_5$ utilisé dans le phase organique par mélange du produit de départ avec le solvant organique.